## Europäisches Patentamt
## European Patent Office
## Office européen des brevets

(11) Veröffentlichungsnummer: **0 072 495**
**B1**

(12) **EUROPÄISCHE PATENTSCHRIFT**

(45) Veröffentlichungstag der Patentschrift:
05.02.86

(51) Int. Cl.⁴: **C 02 F 3/12,** C 02 F 3/26,
C 02 F 3/10

(21) Anmeldenummer: 82107049.7

(22) Anmeldetag: 04.08.82

(54) Verfahren und Vorrichtung zur biologischen Reinigung von Abwasser.

(30) Priorität: 13.08.81 DE 3131989

(43) Veröffentlichungstag der Anmeldung:
23.02.83 Patentblatt 83/8

(45) Bekanntmachung des Hinweises auf die Patenterteilung:
05.02.86 Patentblatt 86/6

(84) Benannte Vertragsstaaten:
AT CH DE FR GB IT LI NL SE

(56) Entgegenhaltungen:
EP - A - 0 046 900
EP - A - 0 052 855
DE - A - 2 002 926
DE - A - 2 249 137
DE - A - 2 535 323
DE - A - 2 640 156
DE - B - 2 839 872
FR - A - 2 168 558

R. HELMER: "Weitergehende Abwasserreinigung",
1977, Seiten 53-55, Braun & CO., Mainz-Wiesbaden, DE.
Lehr- und Handbuch der Abwassertechnik Bd.II Seite
604

(73) Patentinhaber: Linde Aktiengesellschaft,
Abraham-Lincoln-Strasse 21, D-6200 Wiesbaden (DE)

(72) Erfinder: Fuchs, Uwe, Ing.grad., Heiterwanger
Strasse 46, D-8000 München 70 (DE)

(74) Vertreter: Schaefer, Gerhard, Dr., Linde
Aktiengesellschaft Zentrale Patentabteilung,
D-8023 Höllriegelskreuth (DE)

LIBER, STOCKHOLM 1986

EP 0 072 495 B1

## Beschreibung

Die Erfindung betrifft ein Verfahren zur biologischen Reinigung von Abwasser in mindestens zwei unmittelbar aufeinander folgenden Behandlungszonen, in denen das Abwasser in Gegenwart von belebtem Schlamm zumindest teilweise begast und in einer als Nitrifikationszone ausgebildeten Behandlungszone eine Nitrifikation in Gegenwart eines Trägermaterials für nitrifizierende Bakterien durchgeführt wird, bei dem das aus den Behandlungszonen abgezogene Abwasser-Belebtschlamm-Gemisch in einer Nachklärung zu gereinigtem Wasser und Schlamm aufgeteilt und der Schlamm teilweise in die Behandlungszone zurückgeführt wird, sowie eine Vorrichtung zur Durchführung des Verfahrens.

Bei einem solchen Verfahren wird das Abwasser in einer Behandlungszone mit Belebtschlamm unter gleichzeitiger Zuführung eines sauerstoffhaltigen Gases vermischt. Durch die Tätigkeit der in dem Belebtschlamm enthaltenen Mikroorganismen werden die organischen Schmutzstoffe des Abwassers zum Teil in Bakteriensubstanz umgewandelt und zum Teil zu Kohlendioxid und Wasser umgesetzt. Die Mikroorganismen benötigen Bauerstoff, um ihre Stoffwechselfunktion aufrechtzuerhalten, sowie zum Wachsen und zur Vermehrung, wobei sie die organischen Substanzen schnell abbauen.

Neben dem biologischen Abbäu der organischen Sustanz erfolgt in der gleichen Behandlungszone (DE-A 26 40 156) oder in einer weiteren Behandlungszone auch ein chemischer Abbau, bei dem in Gegenwart von hauptsächlich autotrophen Bakterien und bei ausreichender Sauerstoffversorgung der Bakterien Ammonium-Stickstoff zu Nitrit und Nitrat oxidiert wird.

Das Problem bei der Durchführung eines BSB-Abbaus und einer Nitrifikation in der gleichen Behandlungszone oder in unmittelbar hintereinander geschalteten Behandlungszonen ist jedoch, die nur sehr langsam wachsenden Nitrifikanten in ausreichendem Maße im System zu halten, da diese zusammen mit den sehr schnell wachsenden C-abbauenden Bakterien als Überschußschlamm mit abgezogen werden müssen. Durch dieses ständige unfreiwillige Abziehen von Nitrifikanten läßt sich der vorhandene Anmonium-Stickstoff nicht mehr auf die vorgeschriebenen Werte reduzieren.

Zur Vermeidung dieses Problems ist es bekannt, das Abwasser in mehreren Tropfkörpern, die mit Schaumstoffelementen als Trägermaterial für aktive Schlammasse gefüllt sind, zu verrieseln und Luft von unten nach oben zwischen den Schaumstoffelementen hindurch streichen zu lassen (DE-A 20 02 926). Dabei ist jedoch darauf hingewiesen, daß bei Verwendung von Schaumstoffelementen als Ansiedlungsfläche für den biologischen Rasen eines Tropfkörpers die Gefahr gegeben ist, daß dieser vollkommen zuwachsen kann, was Verstopfungen und Behinderungen des Stoffaustausches nach sich ziehen würde, und daß dem nur durch eine direkte Zwangsbelüftung der den biologischen Rasen tragenden Schaumstoffelemente begegnet und erst durch die Zwangsbelüftung eine ausreichende Sauerstoffversorgung sichergestellt werden kann.

Darüber hinaus ist aus der DE-B 28 39 872 auch ein Verfahren zur biologischen Abwasserreinigung bekannt, bei dem eine vollbiologische Totalaufbereitung der Abwässer mit Nitrifikation und Denitrifikation in einer einzigen Verfahrensstufe durchgeführt und das Abwasser über eine lose Schüttung stückiger Schaumstoffkörper geleitet wird, die in einem Drehbehälter umgewälzt und bis über die Wasseroberfläche in die Luft- oder Sauerstoffatmosphäre angehoben werden. Mit der Verwendung des Drehbehälters, der die Schaumstoffteilchen zwangsweise und abwechselnd durch das zu reinigende Abwasser und die sauerstoffhaltige Atmosphäre über dem Wasserspiegel bewegt, ist dieses Verfahren jedoch relativ aufwendig. Außerdem sind bei einer Totalaufbereitung in einem einzigen Becken verschiedene Bakterienarten nebeneinander vorhanden, so daß die Gefahr gegeben ist, daß die schneller wachsenden Bakterienarten die langsamer wachsenden überwuchern und diese zurückgedrängt werden.

Aufgabe der vorliegenden Erfindung ist es, ein Verfahren der eingangs genannten Art sowie eine Vorrichtung zur Durchführung des Verfahrens so auszugestalten, daß auf einfache und wirtschaftliche Weise die Qualität des gereinigten Abwassers verbessert und ein hoher Nitrifikationswert erreicht werden kann.

Diese Aufgabe wird erfindungsgemäß dadurch gelöst, daß in der Nitrifikationszone als Trägermaterial offenporiger Polyurethanschaum der Dichte 20 bis 200 kg/m$^3$ mit einer Porengröße von 0,1 bis 5 mm und einer Teilchengröße von 2 bis 50 mm verwendet wird, daß das Trägermatexian für nitrifizierende Bakterien aus dem aus der Nitrifikationszone ablaufenden Abwasser-Belebtschlamm-Gemisch abgetrennt und in der Nitrifikätionszone zurückgehalten wird und daß das Abwasser in der Nitrifikationszone mit Luft und in der oder den der Nitrifikationszone vorgeschalteten Behandlungszonen mit reinem Sauerstoff oder einem mehr Sauerstoff als Luft enthaltenden Gas begast wird.

Gemäß der Erfindung wird in den ersten Behandlungszonen stufenweise der BSB$_5$ abgebaut und das nur schwach belastete Abwasser-Belebtschlamm-Gemisch in eine mit Nitrifikanten angereicherte Nitrifikationszone geführt. Dort werden die noch vorhandenen Stickstoffverbindungen zu Nitrat oxidiert. Die hierfür notwendige Bakterienkonzentration wird mit Hilfe eines Trägermaterials erreicht, das eine große aktive Oberfläche zur Ansiedlung der nitrifizierenden Bakterien bietet, auf der sich diese gleichmäßig verteilen können. Durch die offenen Makroporen des als Trägermaterial verwendeten Polyusethansohaums werden dabei die nitrifizierenden Bakterien zu einem dezentralisierten Wachstum gezwungen, wodurch sich eine wesentlich größere Stoffaustauschfläche als bei herkömmlichen Belebtschlammflocken ergibt. Da die nitrifizierenden Bakterien stabil in den Makroporen des Trägermaterials fixiert sind, und dieses leicht im Begasungsbecken zurückgehalten werden kann, besteht keine Gefahr, daß die nitrifizierenden Bakterien über die Nachklärung in den Vorfluter abtreiben oder zusammen mit dem Überschußschlamm aus dem System abgezogen werden.

Günstig ist es, das Abwasser in der oder den der Nitrifikationszone vorgeschalteten Behandlungszonen mit reinem Sauerstoff oder einem mehr Sauerstoff als Luft enthaltenden Gas und in der Nitrifikationszone mit Luft zu begasen. Hierdurch wird in den ersten Behandlungszonen ein maximaler Abbau der organischen Substanzen,wie der organischen Kohlenstoffverbindungen, erreicht. Der größte Sauerstoffbedarf tritt in einem Verfahren zur Behandlung von Abwässern unter Anwendung von Belebtschlamm dort auf, wo das Abwasser und die Mikroorganismen zum ersten Mal miteinander vermischt werden, wobei sich die Mikroorganismen in ihrer maximalen Wachstumsphase befinden. Daher wird bei der vorliegenden Erfindung das sauerstoffreiche Gas nur in der oder den ersten Behandlungszonen angewendet, während der restliche Sauerstoffbedarf zur Nitrifikation durch Belüftung mit Luft in einer Nitrifikationszone stattfindet. Die Begasung mit Luft ist notwendig, damit das in den ersten Kammern beim BSB-ABbau entstandene gelöste Kohlendioxid durch den bei der Luftbegasung erforderlichen größeren Gasdurchsatz aus dem Abwasser-/Belebtschlammgemisch ausgestrippt wird und dadurch eine Hemmung der Nitrifikanten durch Kohlendioxid vermieden wird, Durch diese Arbeitsweise werden außerdem beträchtliche Kosten sowohl für die Bereitstellung des Gases zur Begasung als auch bezüglich der baulichen Maßnahmen eingespart.

Als Trägermaterial für nitrifizierende Bakterien wird offenposiger Polyurethanschaum der Dichte 20 - 200 kg-/m³ mit Makroporen der Größe von 0,1 bis 5 mm und mit eines Teilchengröße von 2 bis 50 mm verwendet. Auf diese Weise wird verhindert, daß das Trägermaterial nicht sofort zu Boden sinkt und sich die nitrifizierenden Bakterien somit nicht in ausreichender Weise mit dem zu behandelnden Abwasser vermischen können. Stattdessen können die Polyurethanteilchen gehalten werden.

Durch die erfindungsgemäß vorgeschriebene. Teilchengröße kann außerdem das Zurückhalten des Trägermaterials in der Nitrifikationszine in einfacher Form durch eine hierfür vorgesehene Trenneinrichtung, wie ein Sieb, erfolgen, Dadurch ist sichergestellt, daß immer eine ausreichende Bakterienkonzentration für die Nitrifikation in der Nitrifikationszone vorliegt, ohne daß nennenswerte Verluste auftreten.

In Weiterbildung des erfindungsgemäßen Verfahrens ist vorgesehen, daß das aus der Nitrifikationszone ablaufende Abwasser-Belebtschlamm-Gemisch zum einen Teil der Nachklärung zugeführt und zum anderen Teil in die der Nitrifikationszone vor- und/oder nachgeschaltete Behandlungszone, gegebenenfalls zur Denitrifikation geleitet wird, Soll in der der Nitrifikationszone vorgeschalteten Behandlungszone keine Denitrifikation vorgenommen werden, so wird im wesentlichen nur der aus der Nachklärung rückgeführte Belebtschlamm mit neu zulaufendem Abwasser in bekannter Weise vermischt und begast, Soll in der der Nitrifikationszone vorgeschalteten Behandlungszone dagegen eine Denitrifikation stattfinden, so erfolgt diese unter anoxischen Bedingungen, was bedeutet, daß dann das vom Ablauf der Nitrifikationszone unmittelbar rückgeführte Abwasser-Belebtschlamm-Gemisch zusammen mit dem neu zulaufenden Abwasser nicht oder nur unvollständig begast wird, Das zulaufende Abwasser wird in diesem Falle vor allem verwendet, die zur Reduktion der im rückgeführten Belebtschlamm enthaltenen Nitrate zu Stickstoff erforderlichen Elektronendonatoren, insbesondere Kohlenstoffverbindungen, bereitzustellen, Im Anschluß an die Denitrifikation wird das auf diese Weise behandelte Abwasser-Belebtschlamm-Gemisch einer weiteren Behandlungszone durchgeführt und der. freigewordene Stickstoff, sofern er nicht bereits in der anoxischen Zone entwichen ist, abgeleitet.

Eine Vorrichtung zur Durchführung des erfindunggemäßen Verfahrens umfaßt mindestens zwei, vom Abwasser nacheinander durchströmten Behandlungszonen, wobei eine Behandlungszone als Nitrifikationszone ausgebildet und mit Trägermaterial für nitrifizierende Bakterien beschickt ist, sowie eine der letzten Behandlungszone über einen Ablauf nachgeschaltete Nachkläreinrichtung mit Schlanmrückleitung zu den Behandlungszonen.

Erfindungsgemäß ist eine solche Vorrichtung dadurch gekennzeichnet, daß die Nitrifikationszone mit Polyurethanschaum als Trägermaterial beschickt ist, daß die der Nitrifikationszone vorgeschalteten Behandlungszonen Zufuhreinrichtungen sowie Eintragseinrichtungen für reinen Sauerstoff oder ein mehr Sauerstoff als Luft enthaltendes Cas aufweisen, daß in der Nitrifikationszone eine Lufteintragseinrichtung angeordnet ist und daß zum Zurückhalten des Trägermaterials in der Nitrifikationszone dem Ablauf der Nitrifikationszone eine Trenneinrichtung zugeordnet ist.

Gemäß einer weiteren Ausführungsform ist die exste Behandlungszone zumindest teilweise als Denitrifikationszone ausgebildet und über eine Verbindungsleitung an den Ablauf der Nitrifikationszone angeschlossen, Durch entsprechende

Regelung der Zufuhr für das Begasungsgas kann somit in der ersten Behandlungszone bedarfsweise entweder eine Denitrifikation unter anoxischen Bedingungen, d.h. ohne Gaszufuhr, oder der normale $BSB_5$-Abbau unter Gaszufuhr stattfinden,

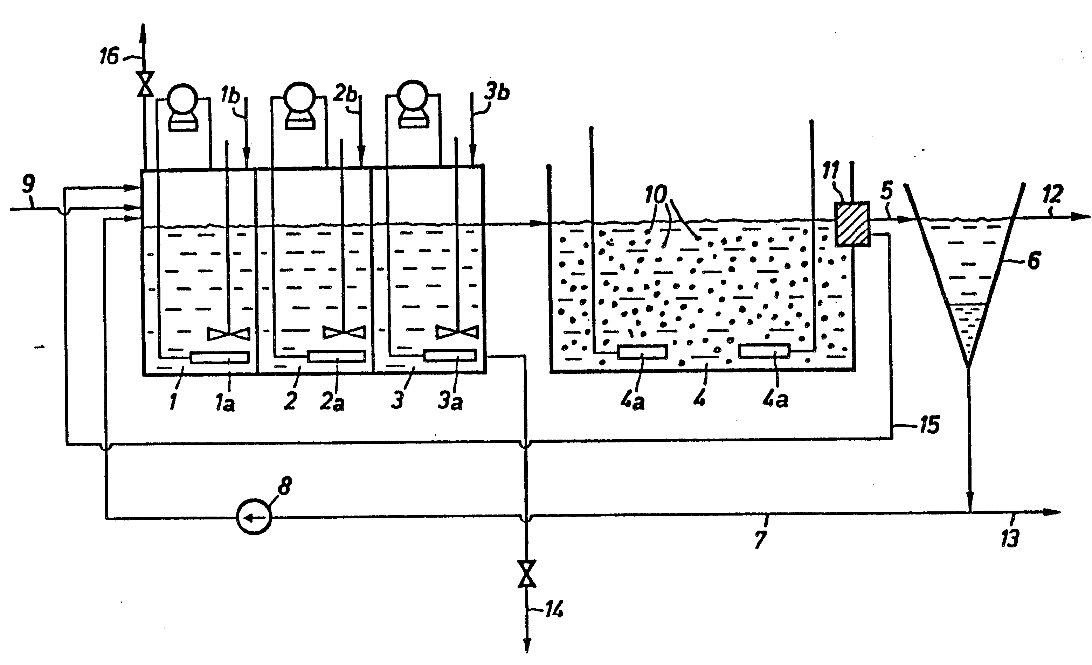

Im folgenden wird das erfindungsgemäße Verfahren anhand eines Ausführungsbeispiels, das schematisch in der Figur dargestellt ist, näher erläutert,

In der Figur ist eine Abwasseranlage mit 4 Behandlungszonen 1, 2, 3, 4 und mit einer über einem an die letzte Behandlungszone 4 angeschlossenen Ablauf 5 nachgeschalteten Nachklärbecken 6, das über eineSchlammrücklaufleitung 7 mit Pumpe 8 mit der ersten Behandlungszone 1 verbunden ist,dargestellt, Das erfindungsgemäße Verfahren kann jedoch nicht nur mit vier Behandlungszonen, sondern je nach Bedarf mit mindestens zwei oder beliebig vielen Behandlungszonen durchgeführt werden, Dabei sind die ersten drei Behandlungszonen 1, 2, 3 gegenüber der Atmosphäre abgedeckt, Der Sauerstoffeintrag kann dabei beispielsweise so erfolgen, daß aus der sich unter den Abdeckungen der Behandlungszonen 1, 2, 3 ausbildenden Gasatmosphäre, die sich aus dem über den Gaszuleitungen 1b, 2b, 3b zugeführten sauerstoffreichen Gas und dem aus dem Flüssigkeitsgemisch aufsteigenden Gas zusamtnensetzt, über eine nicht dargestellte Leitung Gas abgezogen und zu einem nahe dem Beckenboden angeordneten Gasverteiler 1a, 2a, 3a geleitet wird, Über den

3

Gasverteilern la, 2a,3a sind dann Mischvorrichtungen anzuordnen, die für eine gute Durchmischung von Abwasser-Belebtschlamm und Sauerstoff sorgen, Die Behandlungszone 4 ist mit einer Lufteintragseinrichtung 4a versehen, so daß die Behandlungszonen 1, 2, 3 und 4 als Begasungszonen dienen,

Über einen Zulauf 9 gelangt Abwasser in die erste Begasungszone 1, wird dort mit Rücklaufschlamm aus Leitung 7 und eingetragenem Sauerstoff vermischt und in die nächste Begasungszone 2 geleitet, in der es in gleicher Weise behandelt wird und schließlich in die Begasungszone 3 geführt, wo es ebenfalls in der erwähnten Weise mit Sauerstoff und Belebtschlamm vermischt wird.

Während sich das Abwasser in den Begasungszonen 1, 2 und 3 befindet, bauen die im Belebtschlamm vorhandenen Mikroorganismen die organischen Kohlenstoffverbindungen im wesentlichen ab, so daß das aus der Begasungszone 3 abfließende Abwasser nur schwach belastet ist, Dieses Abwasser wird in die Begasungszone 4 geleitet.

Erfindungsgemäß ist diese Begasungszone 4 mit offenposigen Polyurethschaum die Dichte 20 bis 200 kg/m$^3$ nit eines Paregröße von 0,1 bis 5 mm und mit einer Teilschengröße von 2 bis 50 mm als Trägermaterial 10 beschickt. Auf dem Trägermaterial sind nitrifizierende Bakterien angesiedelt, die bewirken, daß unter Luftzufuhr in der Begasungszone 4 der noch im Abwasser vorhandene Anmonium-Stickstoff zu Nitrit bzw, Nitrat oxidiert wird. Außerdem werden restliche organische Substanzen vollständig abgebaut,

Durch die Teilchengröße von 2 bis 50, vorzugsweise 10 mm können die Trägeteilchen in einer am Ablauf 5 aus der Begasungszone 4 angeordneten Trenneinrichtung 11, beispielsweise einem Sieb, ohne weiteres zurückgehalten werden , Dadurch ist sichergestellt, daß keine Nitrifikanten in das Nachklärbecken und somit zusammen mit tem Überschußschlamm abgezogen werden oder eventuell in dem Vorfluter abtreiben,

Das gereinigte Abwasser gelangt schließlich über den Ablauf 5 in das Nachklärbecken 8, aus dem das gereinigte Wasser über Leitung 12 abgeleitet wird, Der abgesetzte Schlamm wird über Leitung 7 aus dem Nachklärbecken 8 abgezogen und zum Teil mit Hilfe der Pumpe 8 in die erste Begasungszone 1 zurückgeführt, während ein anderer Teil als Überschußschlamm über Leitung 13 abgezogen wird. Der Überschußschlamm kann auch zur Entlastung der Nachklärung vor der Nitrifikationszone über Leitung 14 abgezogen werden.

Für den Fall, daß eine Denitrifikation des Abwassers durchgeführt werden soll, ist eine Leitung 15 vorgesehen, über die ein Teil des aus der Begasungszone 4 ablaufenden Abwassers noch vor dem Nachklärbecken 6 in die Begasungszone 1 zurückgeführt werden kann,

Da die Denitrifikation unteranoxischen Bedingungen durchgeführt werden muß, wird durch entsprechende Vorrichtungen der Sauerstoffeintrag in die Begasungszone 1 unterbrochen oder reduziert, so daß diese als Denitrifikationszoul arbeitet, Es werden also das zu denitrifizierende Abwasser aus Leitung 15, Belebtschlamm aus Leitung 7 und zu behandens Abwasser aus Zulauf 9 als Elektronendonator vermischt, Dabei bewirken die im zu behandelndens Abwasser enthaltenen Kohlenstoffverbindungen, daß das im rückgeführten Abwasser vorhandene Nitrit bzw. Nitrat zu Stickstoff reduziert wird. Dieser Stickstoff kann über eine Leitung 16 aus der Denitrifikationszone abgeblasen werden,

Das denitrifizierte Abwasser gelangt anschließend in die Begasungszone 2, in der es mit Sauerstoff vermischt wird und weiter in die Begasungszone 3, In den letztgenannten Begasungszonen findetdann wieder der BSB$_5$-Abbau statt.

## Patentansprüche

1. Verfahren zur biologischen Reinigung von Abwasser in mindestens zwei unmittelbar aufeinander folgenden Behandlungszonen, in denen das Abwasser in Gegenwart von belebtem Schlamm zumindest teilweist begast und in einer als Nitrifikationszone ausgebildeten Behandlungszone eine Nitrifikation in Gegenwart eines Trägermaterials für nitrifizierende Bakterien durchgeführt wird, bei dem das aus den Behandlungszonen abgezogene Abwasser-Belebtschlamm-Gemisch in einer Nachklärung zu gereinigtem Wasser und Schlamm aufgeteilt und der Schlamm teilweise in die Behandlungszonen zurückgeführt wird, dadurch gekennzeichnet, daß in der Nitrifikationszone als Trägermaterial offenporiger Polyurethanschaum der Dichte 20 bis 200 kg/m$^3$ mit einer Porengröße von 0,1 bis 5 mm und einer Teilchengröße von 2 bis 50 mm verwendet wird, daß das Trägermaterial für nitrifizierende Bakterien aus dem aus der Nitrifikationszone ablaufenden Abwasser-BeiebtschlammGemisch abgetrennt und in der Nitrifikationszone zurückgehalten wird und daß das Abwasser in der Nitrifikätionszone mit Luft und in der oder den der Nitrifikationszone vorgeschalteten Behandlungszonen mit reinem Sauerstoff oder einem mehr Sauerstoff als Luft enthaltenden Gas begast wird.

2. Verfahren nach Anspruch 1, dadurch gekennzeichnet, daß das aus der Nitrifikationszone ablaufende AbwasserBelebtschlamm-Gemisch nur zum einen Teil der Nachklärung zugeführt und zum anderen Teil in die der Nitrifikationszone vor- und/oder nachgeschalteten zone, gegebenenfalls zur Denitrifikation, zurückgeleitet wird.

3. Vorrichtung zur Durchführung des Verfahrans nach Anspruch 1 oder 2 mit mindestens zwei vom Abwasser nacheinander durchströmten Behandlungszonen, wobei eine Behandlungszone als Nitrifikationszone ausgebildet und mit Trägermaterial für nitrifizierende Bakterien beschickt ist, sowie mit einer der letzten Behandlungszone über einen Ablauf nachgeschalteten Nachkläreinrichtung mit Schlammrückleitung zu den Behandlungszonen, dadurch gekennzeichnet, daß die Nitrifikationszone (4) mit Polyurethanschaum als Trägermaterial beschickt ist, daß die der Nitrifikationszone (4) vorgeschalteten Behandlungszonen (1, 2, 3) Zufuhreinrichtungen (1b, 2b, 3b) sowie Eintragseinrichtungen (1a, 2a, 3a) für reinen Sauerstoff oder ein mehr Sauerstoff als Luft enthaltendes

4

**0 072 495**

Gás aufweisen, daß in der Nitrifikationszone (4) eine Lufteintragseinrichtung (4a) angeordnet ist und daß zum Zurückhalten des Trägermaterials in der Nitrifikationszone (4) dem Ablauf der Nitrifikationszone (4), eine Trenneinrichtung (11) zugeordnet ist.

4. Vorrichtung nach Anspruch 3 dadurch gekennzeichnet, daß daß die erste Behandlungszone teilweise als DeNitrifikationszone ausgebildet und über eine Verbindungsleitung (15) an den Ablauf (5) der Nitrifikationszone (4), angeschlossen ist.

## Claims

1. A method for the biological purification of waste water in at least two treatment zones immediately following one another, in which the waste water is at least partially treated with gas in the presence of activated sludge, and in one said treatment zone, designed as a nitrification zone, nitrification is carried out in the presence of a carrier material for nitrifying bacteria, wherein the waste water/activated sludge mixture which is removed from the treatment zones is divided into water to be purified and sludge in an after-clarification step and the sludge is partially returnad to the treatment zones, characterised in that in the nitrification zone, openpore polyurethane foam having a density of 20 to 200 kg/m$^3$, a pore size of 0.1 to 5 mm and a particle size of 2 to 50 mm, is used as a carrier material; that the carrier material for nitrifying bacteria is separated from the waste water/activated sludge mixture, which leaves the nitrification zone, and is retained in the nitrification zone; and that, in the nitrification zone, the waste water is treated with air and in the treatment zone or zones preceding the nitrification zone, the waste water is treated with pure oxygen, or a gas which contains more oxygen than air.

2. A method as claimed in Claim 1, characterised in that the waste water/activated sludge mixture leaving the nitrification zone is only in part supplied to the after-clarification step, and the other part is returned if necessary for denitrification, to the treatment zone connected before and/or after the nitrification zone.

3. Apparatus for carrying out the method as claimed in Claim 1 or Claim 2, comprising at least two treatment zones through which waste water passes consecutively, one treatment zone being designed as a nitrification zone and supplied with carrier material for nitrifying bacteria, and an after-clarification device which follows the last treatment zone through an outlet and has a sludge return pipe to the treatment zones, characterised in that the nitrification zone (4) is supplied with polyurethane foam as a carrier material; that the treatment zones (1, 2, 3) preceding the nitrification zone (4) have both supply means (lb, 2b, 3b) and means (la, 2a, 3a) for the introduction of pure oxygen or a gas which contains more oxygen than air; that an air introduction means (4a) is arranged in the nitrification zone (4); and that, in order to retain the carrier material in the nitrification zone (4), the outlet (5) of the nitrification zone (4) is provided with a separating device (11).

4. Apparatus as claimed in Claim 3, characterised in that the first treatment zone is in part designed as a denitrification zone and connected to the outlet (5) of the nitrification zone (4) by means of a connection pipe (15).

## Revendications

1.- Procédé d'épuration biologique d'eaux résiduaires dont au moins deux zones de traitement se suivent directement, dans lesquelles les eaux résiduaires sont chargées en gaz au moins partiellement en présence de boues activées et, dans une zone de traitement agencée comme une zone de nitrification, une nitrification est effectuée en présence d'une matière porteuse de bactéries nitrifiantes, où le mélange d'eaux résiduaires et de boues activées sortant des zones de traitement est séparé par post-clarification en eau épurée et en boues, les boues étant renvoyées en partie dans la zone de traitement, caractérisé en ce que ce qu'on utilise, dans la zone de nitrification comme matière porteuse, une mousse de polyuréthane à pores ouverts d'une densité de 20 à 200 kg/m$^3$, possédant une grosseur de pores de 0,1 à 5 mm et une grosseur de particules de 2 à 50 mm, en ce que la matiére porteuse pour les bactéries de nitrification est séparée du mèlange d'eaux résiduaires et de boues activées sortant de la zone de nitrification et est renvoyée dans la zone de nitrification et en ce que les eaux résiduaires sont chargées en gaz dans la zone de nitrification avec de l'air et, dans la ou les zones de traitement placées en amont de la zone de nitrification, avec de l'oxygène pur ou bien avec un gaz contenant plus d'oxygéne que l'air.

2.- Procédé selon la revendication 1, caractérisé en ce que le mélange d'eaux résiduaires et de boues activées sortant de la zone de nitrification est introduit seulement en partie dans le système de post-clarification tandis qu'une autre partie est recyclée dans la zone de traitement placée en amont et/ou en aval de la zone de nitrification, le cas échéant pour une dénitrification.

3.- Installation pour la mise en oeuvre du procédé selon la revendication 1 ou 2, comportant au moins deux zones de traitement parcourues, l'une après l'autre, par les eaux résiduaires, une zone de traitement étant agencée comme une zone de nitrification et étant alimentée en matière porteuse de bactéries nitrifiantes, ainsi qu'un dispositif de post-clarification disposé en aval de la dernière zone de traitement par l'intermédiaire d'une conduite de décharge et comportant une conduite de recyclage de boues vers les zones de traitement, caractèrisée en ce que la zone de nitrification (4) est alimentée en mousse de polyuréthane servant de matière

5

porteuse, en ce que les zones de traitement (1, 2, 3) placées en amont de la zone de nitrification (4) comportent des dispositifs d'alimentation (lb, 2b, 3b) ainsi que des dispositifs d'introduction (1a, 2a, 3a) d'oxygène pur ou d'un gaz contenant plus d'oxygène que l'air et en ce qu'il est prévu dans la zone de nitrification (4), un dispositif d'introduction d'air (4a) et en ce que, pour retenir la matiére porteuse dans la zone de nitrification (4), un dispositif séparateur (11) est associé à la sortie (5) de la zone de nitrification (4).

4.- Installation selon la revendication 3, caractérisée en ce que la premiére zone de traitement est agencée en partie comme une zone de dénitrification et est reliée par l'intermédiaire d'une conduite de raccordement (15) à la sortie (5) de la zone de nitrification (4).